# EUROPEAN PATENT APPLICATION

(11) **EP 3 952 183 A1**
(43) Date of publication of application: **09.02.2022**
(21) Application number: 20779939.6
(22) Date of filing: 23.03.2020
(51) Int. Cl.: H04L 5/00

(54) **METHOD FOR DETERMINING REFERENCE VALUE, AND TERMINAL**

(30) Priority: 27.03.2019 CN 201910240018
(71) Applicant: VIVO MOBILE COMMUNICATION CO., LTD., Dongguan, Guangdong 523860 (CN)
(72) Inventor: PENG, Shuyan, Dongguan, Guangdong 523860 (CN); WU, Huaming, Dongguan, Guangdong 523860 (CN); JI, Zichao, Dongguan, Guangdong 523860 (CN)
(74) Representative: Lavoix
(86) International application number: PCT/CN2020/080681
(87) International publication number: WO 2020/192631

(57) **Abstract**

This disclosure provides a method for determining a reference value and a terminal. The method includes: determining a reference value, where the reference value is a reference value for a sidelink channel, and a function of the reference value includes at least one of the following: being used for scrambling or descrambling of information on the sidelink channel; being used for initialization of a sequence of the sidelink channel; being used for selection of a sequence of the sidelink channel; being used for initialization of a sequence of a reference signal of the sidelink channel; or being used for cyclic offset of a reference signal of the sidelink channel.

## Description

### CROSS-REFERENCE TO RELATED APPLICATIONS

This application claims priority to Chinese Patent Application No. 201910240018.1, filed in China on March 27, 2019, which is incorporated herein by reference in its entirety.

### TECHNICAL FIELD

This disclosure relates to the field of communications technologies, and in particular, to a method for determining a reference value and a terminal.

### BACKGROUND

A sidelink (sidelink) refers to a link between terminals for direct communication without using a network. The sidelink supports two resource allocation modes: scheduled resource allocation mode and a terminal-autonomous resource selection mode. In long term evolution (Long Term Evolution, LTE), in the scheduled resource allocation mode, a base station configures resources for sidelink; and in the terminal-autonomous resource selection mode, a terminal periodically reserves some resources based on a monitoring result over a period of time.

LTE sidelink involves the following channels:
physical sidelink control channel (Physical Sidelink Control Channel, PSCCH): A transmitting terminal transmits control information (for example, sidelink control information SCI, Sidelink Control Information, or sidelink assignment SA, Sidelink Assignment) on the PSCCH, to provide some information that is required for data demodulation;
physical sidelink shared channel (Physical Sidelink Shared Channel, PSSCH);
physical sidelink broadcast channel (Physical Sidelink Broadcast Channel, PSBCH); and
physical sidelink discovery channel (Physical Sidelink Discovery Channel, PSDCH).

After receiving the control information, a receiving terminal demodulates the control information, and determines, based on the demodulated control information, a transport block size, a modulation and coding scheme, allocated resources, and the like. The receiving terminal then receives and demodulates data on a corresponding time-frequency resource based on this information.

New radio (New Radio, NR) sidelink involves the following channels:
physical sidelink control channel (Physical Sidelink Control Channel, PSCCH): A transmitting terminal transmits control information (for example, sidelink control information SCI, Sidelink Control Information, or sidelink assignment SA, Sidelink Assignment) on the PSCCH, to provide some information that is required for data demodulation;
physical sidelink shared channel (Physical Sidelink Shared Channel, PSSCH);
physical sidelink broadcast channel (Physical Sidelink Broadcast Channel, PSBCH); and
physical sidelink feedback channel (Physical Sidelink Feedback Channel, PSFCH).

Discussions about the NR sidelink have discussed that a control channel needs to carry a destination identifier (destination ID), a source identifier (source ID), and a hybrid automatic repeat request process identifier (HARQ process ID).

In LTE, a cyclic redundancy check (Cyclic Redundancy Check, CRC) of the PSCCH is not scrambled, and a sequence generator of the PSCCH is initialized using a fixed value. Currently, discussions about NR sidelink have not reached a specific conclusion on how the destination ID, source ID and HARQ process ID are carried.

For NR sidelink, to reduce overheads of protocol standardization, some designs of a Uu interface may be reused. However, some parameters related to scrambling or descrambling of the Uu interface are obtained in a connected state through radio resource control (Radio Resource Control, RRC) configuration. In a specific case, there may be no connection to a network side, so a terminal may not be able to obtain the parameters related to scrambling or descrambling. In this case, how the terminal obtains the parameters related to scrambling or descrambling has not yet been clearly defined.

### SUMMARY

The embodiments of the disclosure provide a method for determining a reference value and a terminal, to resolve a problem of how to obtain scrambling-related parameters in a sidelink system in the related art.

To resolve the foregoing technical problem, this disclosure is implemented as follows: A method for determining a reference value, applied to a terminal, including:
determining a reference value, where the reference value is a reference value for a sidelink channel, and a function of the reference value includes at least one of the following:
being used for scrambling or descrambling of information on the sidelink channel;
being used for initialization of a sequence of the sidelink channel;
being used for selection of a sequence of the sidelink channel;
being used for initialization of a sequence of a reference signal of the sidelink channel; or
being used for cyclic offset of a reference signal of the sidelink channel.

An embodiment of this disclosure further provides a terminal, including:
a determining module, configured to determine a reference value, where the reference value is a reference value for a sidelink channel, and a function of the reference value includes at least one of the following:
being used for scrambling or descrambling of information on the sidelink channel;
being used for initialization of a sequence of the sidelink channel;
being used for selection of a sequence of the sidelink channel;
being used for initialization of a sequence of a reference signal of the sidelink channel; or
being used for cyclic offset of a reference signal of the sidelink channel.

An embodiment of this disclosure further provides a terminal, including a processor, a memory, and a computer program stored in the memory and capable of running on the processor, where when the computer program is executed by the processor, the steps of the foregoing method for determining a reference value are implemented.

An embodiment of this disclosure further provides a computer-readable storage medium, where the computer-readable storage medium stores a computer program, and when the computer program is executed by a processor, the steps of the foregoing method for determining a reference value are implemented.

In the embodiments of this disclosure, a method for determining a reference value related to scrambling or descrambling of the sidelink channel is provided, so that the sidelink channel can be scrambled or descrambled while protocol overheads are reduced.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and a person of ordinary skill in the art may still derive other drawings from these accompanying drawings without creative efforts.
FIG. 1 is a flowchart of steps of a method for determining a reference value according to an embodiment of this disclosure;
FIG. 2 is a first schematic structural diagram of a terminal according to an embodiment of this disclosure; and
FIG. 3 is a second schematic structural diagram of a terminal according to an embodiment of this disclosure.

### DESCRIPTION OF EMBODIMENTS

The following clearly and completely describes the technical solutions in the embodiments of this disclosure with reference to the accompanying drawings in the embodiments of this disclosure. It is clearly that the described embodiments are merely some rather than all of the embodiments of this disclosure. All other embodiments that a person of ordinary skill in the art obtains without creative efforts based on the embodiments of this disclosure shall fall within the protection scope of this disclosure.

In the embodiments of this disclosure, terms such as "as an example" or "for example" are used to represent giving an example, an instance, or an illustration. Any embodiment or design solution described as "as an example" or "for example" in the embodiments of this disclosure should not be construed as preferred or advantageous over other embodiments or design solutions. To be precise, the terms such as "as an example" or "for example" are intended to present a related concept in a specific manner. In the embodiments of this disclosure, LTE and NR systems are taken as examples, but are not limited to these systems, and the technical solutions provided in this disclosure may be applied to another system with the same problem.

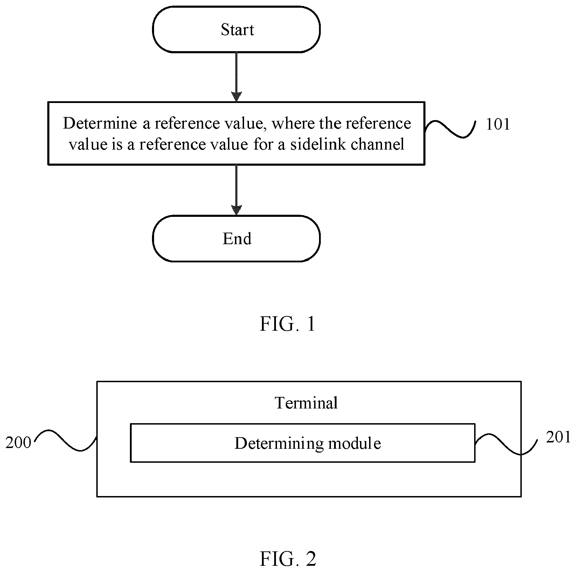

As shown in FIG. 1, an embodiment of this disclosure provides a method for determining a reference value, applied to a terminal, including the following steps:

Step 101: Determine a reference value, where the reference value is a reference value for a sidelink channel, and a function of the reference value includes at least one of the following:
being used for scrambling or descrambling of information on the sidelink channel, where the terminal may directly use the reference value to perform CRC scrambling of the sidelink channel, and in this case, the reference value may also be referred to as a scrambling value;
being used for initialization of a sequence of the sidelink channel, where the terminal may directly use the reference value for the initialization of the sequence of the sidelink channel;
being used for selection of a sequence of the sidelink channel, where the terminal may select the sequence based on the reference value, for example, select, based on the reference value and from a sequence set, a sequence whose index is the reference value as the sequence of the sidelink channel;
being used for initialization of a sequence of a reference signal of the sidelink channel, where the terminal may directly use the reference value for the initialization of the sequence of the reference signal of the sidelink channel; or
being used for cyclic offset of a reference signal of the sidelink channel, where the terminal may directly use the reference value to perform the cyclic offset of a reference signal of the sidelink channel, and in this case, the reference value may also be referred to as a cyclic offset value.

It should be noted that the terminals mentioned in the embodiments of this disclosure include: a transmitting terminal and a receiving terminal that are in a sidelink. The transmitting terminal performs a scrambling-related operation based on a determined reference value, and the receiving terminal performs a descrambling-related operation based on the determined reference value. The sidelink channel includes at least one of PSSCH, PSCCH, PSBCH, or PSFCH, which is not specifically limited herein.

Optionally, in a case that the reference value has different functions, the reference value takes a same value or different values. For example, a reference value used for scrambling or descrambling of information on the sidelink channel may be the same as or different from a reference value used for initialization of a sequence of the sidelink channel. For another example, a reference value used for initialization of a sequence of a reference signal of the sidelink channel may be the same as or different from a reference value used for cyclic offset of a reference signal of the sidelink channel. In other words, any two of specific values of five different functions of the reference values may be the same.

In the embodiments of this disclosure, the sidelink channel may be used for one-step transmission (to be specific, the sidelink channel is used for transmission), or the sidelink channel may be used for two-step transmission (to be specific, a first-part sidelink channel and a second-part sidelink channel are used for transmission). In a case that sidelink channels include the first-part sidelink channel and the second-part sidelink channel, the reference value includes a reference value for the first-part sidelink channel and a reference value for the second-part sidelink channel.

It should be noted that the reference value satisfies at least one of the following conditions:

In a case that the reference value for the first-part sidelink channel has different functions, the reference value for the first-part sidelink channel takes a same value or different values. For example, a reference value used for initialization of a sequence of a reference signal of the first-part sidelink channel may be the same as or different from a reference value used for cyclic offset of a reference signal of the first-part sidelink channel. Examples are not provided one by one herein.

In a case that the reference value for the second-part sidelink channel has different functions, the reference value for the second-part sidelink channel takes a same value or different values. For example, a reference value used for initialization of a sequence of a reference signal of the second-part sidelink channel may be the same as or different from a reference value used for cyclic offset of a reference signal of the second-part sidelink channel. Examples are not provided one by one herein.

In a case that the reference value for the second-part sidelink channel has a same function as the reference value for the first-part sidelink channel, the reference value for the second-part sidelink channel takes a same value as the reference value for the first-part sidelink channel. For example, a value of a reference value used for scrambling or descrambling of information on the second-part sidelink channel is the same as a value of a reference value used for scrambling or descrambling of information on the first-part sidelink channel. Examples are not provided one by one herein.

Optionally, in the embodiment of this disclosure, the function of the reference value for the first-part sidelink channel includes at least one of the following:
being used for scrambling or descrambling of information on the first-part sidelink channel;
being used for initialization of a sequence of the first-part sidelink channel;
being used for selection of a sequence of the first-part sidelink channel;
being used for initialization of a sequence of a reference signal of the first-part sidelink channel; or
being used for cyclic offset of a reference signal of the first-part sidelink channel.

Optionally, in the embodiment of this disclosure, the function of the reference value for the second-part sidelink channel includes at least one of the following:
being used for scrambling or descrambling of information on the second-part sidelink channel;
being used for initialization of a sequence of the second-part sidelink channel;
being used for selection of a sequence of the second-part sidelink channel;
being used for initialization of a sequence of a reference signal of the second-part sidelink channel; or
being used for cyclic offset of a reference signal of the second-part sidelink channel.

The embodiments of this disclosure provide the following six manners to determine the reference value for the sidelink channel, the reference value for the first-part sidelink channel, or the reference value for the second-part sidelink channel, which are described as follows:

Manner 1: The reference value is any one of the following:
a fixed value pre-defined by a protocol or configured by a terminal or pre-configured by a network or configured by a network;
a zone identifier (zone ID) of a location of a transmitting terminal;
a zone identifier (zone ID) of a location of a receiving terminal;
an identifier of a resource pool where a transmitting resource selected by a transmitting terminal is located, that is, a resource pool ID;
an identifier of a transmitting resource selected by a transmitting terminal, that is, a resource ID;
an identifier of a receiving terminal, that is, a destination ID;
an identifier of a terminal group where a receiving terminal is located, group ID;
an identifier of a terminal group where a transmitting terminal is located, group ID; or
an identifier of a transmitting terminal, that is, a source ID.

As an optional embodiment, in a case that the reference value is the zone identifier (zone ID) of the location of the transmitting terminal or the zone identifier (zone ID) of the location of the receiving terminal, terminals in a same zone may perceive each other to avoid a conflict on a resource. Different zones may have a same frequency domain, and interference coordination is performed.

As another optional embodiment, if in configuration of a resource pool, the resource pool may be configured in an overlapping manner, the resource pool ID may be used as the reference value, to perform interference coordination on a same resource.

As another optional embodiment, during a connection establishment process, a non-access stratum informs an access stratum of the identifier of the transmitting terminal (source ID), and the receiving terminal may obtain the source ID. The transmitting terminal and the receiving terminal may use the source ID as the reference value.

It should be noted that a manner of configuring the fixed value by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

Manner 2: Correspondingly, step 101 includes:
determining the reference value based on a transmission mode of the sidelink channel, where
in a case that the transmission mode of the sidelink channel is broadcast, the reference value is determined to be a fixed value, where the fixed value is pre-defined by a protocol or configured by a terminal or pre-configured by a network or configured by a network; and
in a case that the transmission mode of the sidelink channel is unicast or multicast, the reference value is determined to be any one of the following identifiers:
   a zone identifier (zone ID) of a location of a transmitting terminal;
   a zone identifier (zone ID) of a location of a receiving terminal;
   an identifier of a resource pool where a transmitting resource selected by a transmitting terminal is located, that is, a resource pool ID;
   an identifier of a transmitting resource selected by a transmitting terminal, that is, a resource ID;
   an identifier of a receiving terminal, that is, a destination ID;
   an identifier of a terminal group where a receiving terminal is located;
   an identifier of a terminal group where a transmitting terminal is located; or
   an identifier of a transmitting terminal, that is, a source ID.

As an optional embodiment, in a case that the reference value is the zone identifier (zone ID) of the location of the transmitting terminal or the zone identifier (zone ID) of the location of the receiving terminal, terminals in a same zone may perceive each other to avoid a conflict on a resource. Different zones may have a same frequency domain, and interference coordination is performed.

As another optional embodiment, if in configuration of a resource pool, the resource pool may be configured in an overlapping manner, the resource pool ID may be used as the reference value, to perform interference coordination on a same resource.

As another optional embodiment, in a unicast transmission mode, a non-access stratum informs an access stratum of the identifier of the transmitting terminal (source ID), and the receiving terminal may obtain the source ID. The transmitting terminal and the receiving terminal may use the source ID as the reference value.

As another optional embodiment, in a multicast transmission mode, the non-access stratum informs the access stratum of an identifier of a terminal in a group (to be specific, identifiers of all terminals in the group), and the transmitting terminal uses an identifier of any terminal in the group (that is, the source ID) as the reference value. The receiving terminal knows a possible source ID of a terminal in the group, and the receiving terminal uses the known possible source ID to blindly detect the sidelink channel until a detection succeeds or a maximum number of blind detections is reached.

It should be noted that a manner of configuring the fixed value by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

Manner 3: Correspondingly, step 101 includes:
selecting the reference value in a first set based on a target identifier, where the first set is pre-defined by a protocol or configured by a terminal or pre-configured by a network or configured by a network, and the first set includes at least one value; and
the target identifier includes any one of the following:
   a zone identifier (zone ID) of a location of a transmitting terminal;
   a zone identifier (zone ID) of a location of a receiving terminal;
   an identifier of a resource pool where a transmitting resource selected by a transmitting terminal is located, that is, a resource pool ID;
   an identifier of a transmitting resource selected by a transmitting terminal, that is, a resource ID;
   an identifier of a receiving terminal, that is, a destination ID;
   an identifier of a terminal group where a receiving terminal is located;
   an identifier of a terminal group where a transmitting terminal is located; or
   an identifier of a transmitting terminal, that is, a source ID.

Specifically, an intermediate value is calculated based on the target identifier and a preset formula, and a value in the first set is selected as the reference value based on the intermediate value.

For example, the first set includes N values {A₁, A₂, .., A_{N}}. If (zone ID) *mod N* = n or (*resource pool ID*) *mod N* = n, the reference value is determined to be the n^{th} value Aₙ in the first set.

It should be noted that a manner of configuring the first set by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

Manner 4: Correspondingly, step 101 includes:
selecting, a value that has a mapping relationship with a target identifier, as the reference value, based on a mapping relationship that is pre-defined by a protocol or configured by a terminal or pre-configured by a network or configured by a network, where
the target identifier includes any one of the following:
   a zone identifier (zone ID) of a location of a transmitting terminal;
   a zone identifier (zone ID) of a location of a receiving terminal;
   an identifier of a resource pool where a transmitting resource selected by a transmitting terminal is located, that is, a resource pool ID;
   an identifier of a transmitting resource selected by a transmitting terminal, that is, a resource ID;
   an identifier of a receiving terminal, that is, a destination ID;
   an identifier of a terminal group where a receiving terminal is located;
   an identifier of a terminal group where a transmitting terminal is located; or
   an identifier of a transmitting terminal, that is, a source ID.

It should be noted that a manner of configuring the mapping relationship by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

Manner 5: Correspondingly, step 101 includes:
determining that a value indicated by indication information that is sent by a network side device is the reference value, where the indication information is used to indicate a value in a second set, or the indication information is used to indicate an index of a value in a second set; and
the second set is pre-defined by a protocol or configured by a terminal or pre-configured by a network or configured by a network, and the second set includes at least one value.

Continuing the above example, the method also includes:
receiving downlink control information DCI or radio resource control RRC signaling or sidelink control information SCI, where the DCI or RRC signaling or SCI is transmitted by the network side device and carries the indication information.

As in a preferred embodiment, the network side device randomly selects a value in a second set as the reference value, and indicates the reference value to a terminal through the indication information.

It should be noted that a manner of configuring the second set by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

Manner 6: Correspondingly, step 101 includes:
randomly selecting a value in a third set as the reference value, where
the third set is pre-defined by a protocol or configured by a terminal or pre-configured by a network or configured by a network, and the third set includes at least one value.

In this manner, the transmitting terminal selects a value as the reference value, and the receiving terminal uses different values in the third set in turn to blindly detect the sidelink channel until a detection succeeds or a maximum number of blind detections is reached.

It should be noted that a manner of configuring the third set by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

In summary, in the above-mentioned embodiments of this disclosure, if the sidelink channel is used for one-step transmission, the receiving terminal can demodulate resource allocation information from information carried by the sidelink channel, so that interference coordination may be performed on terminals on a same resource, to reduce interference.

The embodiment of this disclosure also provides three manners to determine the reference value for the second-part sidelink channel based on the information of the first-part sidelink channel, which are described as follows:

Manner 7: The method further includes:
determining the reference value for the second-part sidelink channel based on indication by the information on the first-part sidelink channel, where
the information on the first-part sidelink channel indicates the reference value, or the information on the first-part sidelink channel indicates an index of a value in a fourth set, or the information on the first-part sidelink channel is used to implicitly indicate an index of a value in a fourth set; and
the fourth set is pre-defined by a protocol or configured by a terminal or pre-configured by a network or configured by a network, and the fourth set includes at least one value.

It should be noted that a manner of configuring the fourth set by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

Manner 8: The method further includes:
determining the reference value for the second-part sidelink channel based on a transmission mode indicated by the first-part sidelink channel, where
in a case that the transmission mode is unicast or multicast, the reference value is an identifier of a receiving terminal or an identifier of a terminal group where a receiving terminal is located or an identifier of a transmitting terminal; and
in a case that the transmission mode is broadcast, the reference value is a fixed value or a random value in a fifth set, where the fifth set is pre-defined by a protocol or configured by a terminal or pre-configured by a network or configured by a network, and the fifth set includes at least one value.

The identifier of the transmitting terminal and the identifier of the receiving terminal may be obtained through interaction in a connection establishment process or carried in the first-part sidelink channel.

If the transmission mode is multicast, and the reference value is the identifier of the terminal group where the receiving terminal is located, that is, a group ID, a terminal in a group (that is, a terminal belonging to the group) may obtain the identifier of the terminal group where the receiving terminal is located, that is, the group ID.

It should be noted that a manner of configuring the fifth set by the network includes: The network performs configuration based on any one of the following information:
master information block MIB;
system information block SIB;
radio resource control RRC signaling;
downlink control information DCI;
sidelink control information SCI; or
sidelink-radio resource control SL-RRC signaling.

Manner 9: The method further includes:
determining the reference value for the second-part sidelink channel based on the information on the first-part sidelink channel, where all or some of the information on the first-part sidelink channel is used as the reference value.

For example, a CRC of the first-part sidelink channel is used as the reference value for initialization of a sequence of the second-part sidelink channel. After the receiving terminal successfully demodulates SCI of the first-part sidelink channel, because CRCs of different SCI are probably different, the CRC of the first-part sidelink channel may be used to scramble the second-part sidelink channel.

In summary, in a case that the first-part sidelink channel is a control channel, the second-part sidelink channel may be a control channel, and the second-part sidelink channel may alternatively be a feedback channel. This is not specifically limited herein. In a case that the first-part sidelink channel is a control channel and the second-part sidelink channel may alternatively be a feedback channel, the reference value for the first-part sidelink channel is associated with the reference value for the second-part sidelink channel. For example, the reference value for the second-part sidelink channel is generated based on the reference value for the first-part sidelink channel. For another example, some of the information of the first-part sidelink channel is used as the reference value for the second-part sidelink channel.

Optionally, in the embodiment of this disclosure, the information on the first-part sidelink channel includes at least one of the following:
an identifier of the receiving terminal, that is, a destination ID;
an identifier of the transmitting terminal, that is, a source ID;
a transmission mode of the sidelink channel, where the transmission mode includes broadcast, unicast, and multicast; or
information of the reference value for the second-part sidelink channel.

Optionally, the information of the reference value for the second-part sidelink channel includes at least one of the following:
a reference value;
a reference value set; or
an index of a value in the reference value set.

Information on the second-part sidelink channel includes at least one of the following:
an identifier of the receiving terminal, that is, a destination ID;
an identifier of the transmitting terminal, that is, a source ID; or
a HARQ process identifier.

To more clearly describe the method for determining a reference value provided in the embodiments of this disclosure, the following provides a collection of examples about scrambling of a sidelink channel.

### Example 1

A protocol predefines a scrambling sequence for a PSCCH reference signal as {0, 3, 6, 9}. A scrambling ID is selected based on zone ID.
(a) If zone ID = 1, since 1 mod 4 = 1, the first value (that is, 0) in the sequence is used to scramble the PSCCH reference signal.
(b) If zone ID = 6, since 6 mod 4 = 2, the second value (that is, 3) in the sequence is used to scramble the PSCCH reference signal.

### Example 2

A zone ID is used for initialization of a PSCCH sequence generator. An initial value of a scrambled sequence of the PSCCH is associated with the zone ID.

### Example 3

The first-part PSCCH carries a destination ID and a HARQ process ID.

A CRC of the first-part PSCCH is not scrambled. A sequence generator of the first-part PSCCH is initialized using a fixed value.

A receiving terminal performs demodulation. If the destination ID carried in the first-part PSCCH matches an ID of the receiving terminal, the second-part PSCCH is demodulated. The second-part PSCCH includes a source ID.

A CRC of the second-part PSCCH is scrambled using the destination ID. A sequence generator of the second-part PSCCH is initialized using a fixed value.

### Example 4

A sequence generator of the first-part PSCCH is initialized using a zone ID.

The second-part PSCCH carries a destination ID and a HARQ process ID.

A CRC of the second-part PSCCH is not scrambled. A sequence generator of the second-part PSCCH is initialized using a fixed value.

### Example 5

A sequence generator of the first-part PSCCH is initialized using a fixed value. The first-part PSCCH carries a destination ID and a HARQ process ID.

The second-part PSCCH is scrambled using the destination ID. The second-part PSCCH carries a source ID.

### Example 6

The first-part PSCCH carries information of part of a destination ID (destination ID part 1), and the destination ID part 1 is assumed to be 8-bit information. A CRC of the first-part PSCCH is not scrambled. A sequence generator of the first-part PSCCH is initialized using a fixed value.

The second-part PSCCH carries information of part of the destination ID (destination ID part 2), and the destination ID part 2 is assumed to be 16-bit information. A CRC of the second-part PSCCH is scrambled using the destination ID part 1. A sequence generator of the second-part PSCCH is initialized using a fixed value.

### Example 7

The first-part PSCCH carries a destination ID and a transmission mode. A CRC of the first-part PSCCH is not scrambled. A sequence generator of the first-part PSCCH is initialized using a fixed value.

In a case of broadcast, the CRC of the second-part PSCCH is not scrambled. The second-part PSCCH is scrambled using a fixed value.

In a case of unicast or multicast, the second-part PSCCH carries a source ID and a HARQ process ID, and the CRC of the second-part PSCCH is scrambled using the destination ID. The second-part PSCCH is scrambled using the zone ID.

### Example 8

The first-part PSCCH carries a scrambling value for the second-part PSCCH.

A CRC of the first-part PSCCH is not scrambled. A sequence generator of the first-part PSCCH is initialized using a fixed value.

A CRC of the second-part PSCCH is scrambled and a sequence generator of the second-part PSCCH is initialized, using the scrambling value carried in the first-part PSCCH.

### Example 9

A same scrambling value, for example, a predefined value or a zone ID, is used for scrambling of CRC, sequence initialization, and DMRS sequence initialization of the PSCCH.

### Example 10

The first-part PSCCH carries a scrambling value for the second-part PSCCH.

A CRC of the first-part PSCCH, sequence initialization of the first-part PSCCH, and a DMRS of the first-part PSCCH are not scrambled.

A CRC of the second-part PSCCH is scrambled using the scrambling value indicated in the first-part PSCCH. Sequence initialization of the second-part PSCCH is scrambled using a source ID. DMRS sequence initialization of the second-part PSCCH is scrambled using the source ID.

### Example 11

A transmitting terminal generates a sequence of the second-part PSFCH based on a CRC value of the first-part PSCCH.

A receiving terminal computes the sequence of the second-part PSFCH based on the CRC value of the first-part PSCCH, thereby demodulating the PSFCH.

As shown in FIG. 2, an embodiment of this disclosure further provides a terminal 200, including:
a determining module 201, configured to determine a reference value, where the reference value is a reference value for a sidelink channel, and a function of the reference value includes at least one of the following:
being used for scrambling or descrambling of information on the sidelink channel;
being used for initialization of a sequence of the sidelink channel;
being used for selection of a sequence of the sidelink channel;
being used for initialization of a sequence of a reference signal of the sidelink channel; or
being used for cyclic offset of a reference signal of the sidelink channel.

Optionally, in the embodiment of this disclosure, in a case that sidelink channels include a first-part sidelink channel and a second-part sidelink channel, the reference value includes a reference value for the first-part sidelink channel and a reference value for the second-part sidelink channel.

A function of the reference value for the first-part sidelink channel includes at least one of the following:
being used for scrambling or descrambling of information on the first-part sidelink channel;
being used for initialization of a sequence of the first-part sidelink channel;
being used for selection of a sequence of the first-part sidelink channel;
being used for initialization of a sequence of a reference signal of the first-part sidelink channel; or
being used for cyclic offset of a reference signal of the first-part sidelink channel.

A function of the reference value for the second-part sidelink channel includes at least one of the following:
being used for scrambling or descrambling of information on the second-part sidelink channel;
being used for initialization of a sequence of the second-part sidelink channel;
being used for selection of a sequence of the second-part sidelink channel;
being used for initialization of a sequence of a reference signal of the second-part sidelink channel; or
being used for cyclic offset of a reference signal of the second-part sidelink channel.

Optionally, in the embodiment of this disclosure, the reference value is any one of the following:
a fixed value pre-defined by a protocol or configured by a terminal or pre-configured by a network or configured by a network;
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

Optionally, in the embodiment of this disclosure, the determining module includes:
a first determining submodule, configured to determine the reference value based on a transmission mode of the sidelink channel, where
in a case that the transmission mode of the sidelink channel is broadcast, the reference value is determined to be a fixed value, where the fixed value is pre-defined by a protocol or configured by a terminal or pre-configured by a network or configured by a network; and
in a case that the transmission mode of the sidelink channel is unicast or multicast, the reference value is determined to be any one of the following identifiers:
   a zone identifier of a location of a transmitting terminal;
   a zone identifier of a location of a receiving terminal;
   an identifier of a resource pool where a transmitting resource selected by a transmitting terminal is located;
   an identifier of a transmitting resource selected by a transmitting terminal;
   an identifier of a receiving terminal;
   an identifier of a terminal group where a receiving terminal is located;
   an identifier of a terminal group where a transmitting terminal is located; or
   an identifier of a transmitting terminal.

Optionally, in the embodiment of this disclosure, the determining module includes:
a second determining submodule, configured to select the reference value in a first set based on a target identifier, where the first set is pre-defined by a protocol or configured by a terminal or pre-configured by a network or configured by a network, and the first set includes at least one value; and
the target identifier includes any one of the following:
   a zone identifier of a location of a transmitting terminal;
   a zone identifier of a location of a receiving terminal;
   an identifier of a resource pool where a transmitting resource selected by a transmitting terminal is located;
   an identifier of a transmitting resource selected by a transmitting terminal;
   an identifier of a receiving terminal;
   an identifier of a terminal group where a receiving terminal is located;
   an identifier of a terminal group where a transmitting terminal is located; or
   an identifier of a transmitting terminal.

Optionally, in the embodiment of this disclosure, the determining module includes:
a third determining submodule, configured to select, a value that has a mapping relationship with a target identifier, as the reference value, based on a mapping relationship that is pre-defined by a protocol or configured by a terminal or pre-configured by a network or configured by a network; and
the target identifier includes any one of the following:
   a zone identifier of a location of a transmitting terminal;
   a zone identifier of a location of a receiving terminal;
   an identifier of a resource pool where a transmitting resource selected by a transmitting terminal is located;
   an identifier of a transmitting resource selected by a transmitting terminal;
   an identifier of a receiving terminal;
   an identifier of a terminal group where a receiving terminal is located;
   an identifier of a terminal group where a transmitting terminal is located; or
   an identifier of a transmitting terminal.

Optionally, in the embodiment of this disclosure, the determining module includes:
a fourth determining submodule, configured to determine that a value indicated by indication information that is sent by a network side device is the reference value, where the indication information is used to indicate a value in a second set, or the indication information is used to indicate an index of a value in a second set; and
the second set is pre-defined by a protocol or configured by a terminal or pre-configured by a network or configured by a network, and the second set includes at least one value.

Optionally, in the embodiment of this disclosure, the determining module includes:
a fifth determining submodule, configured to randomly select a value in a third set as the reference value, where
the third set is pre-defined by a protocol or configured by a terminal or pre-configured by a network or configured by a network, and the third set includes at least one value.

Optionally, in the embodiment of this disclosure, the terminal further includes:
a second determining module, configured to determine the reference value for the second-part sidelink channel based on indication by the information on the first-part sidelink channel, where
the information on the first-part sidelink channel indicates the reference value, or the information on the first-part sidelink channel indicates an index of a value in a fourth set, or the information on the first-part sidelink channel is used to implicitly indicate an index of a value in a fourth set; and
the fourth set is pre-defined by a protocol or configured by a terminal or pre-configured by a network or configured by a network, and the fourth set includes at least one value.

Optionally, in the embodiment of this disclosure, the terminal further includes:
a third determining module, configured to determine the reference value for the second-part sidelink channel based on a transmission mode indicated by the first-part sidelink channel, where
in a case that the transmission mode is unicast or multicast, the reference value is an identifier of a receiving terminal or an identifier of a terminal group where a receiving terminal is located or an identifier of a transmitting terminal; and
in a case that the transmission mode is broadcast, the reference value is a fixed value or a random value in a fifth set, where the fifth set is pre-defined by a protocol or configured by a terminal or pre-configured by a network or configured by a network, and the fifth set includes at least one value.

Optionally, in the embodiment of this disclosure, the terminal further includes:
a fourth determining module, configured to determine the reference value for the second-part sidelink channel based on the information on the first-part sidelink channel, where all or some of the information on the first-part sidelink channel is used as the reference value.

Optionally, in the embodiment of this disclosure, the terminal further includes:
a receiving module, configured to receive downlink control information DCI or radio resource control RRC signaling or sidelink control information SCI, where the DCI or RRC signaling or SCI is transmitted by the network side device and carries the indication information.

Optionally, in the embodiment of this disclosure, in a case that the reference value has different functions, the reference value takes a same value or different values.

Optionally, in the embodiment of this disclosure, the reference value satisfies at least one of the following conditions:
in a case that the reference value for the first-part sidelink channel has different functions, the reference value for the first-part sidelink channel takes a same value or different values;
in a case that the reference value for the second-part sidelink channel has different functions, the reference value for the second-part sidelink channel takes a same value or different values; and
in a case that the reference value for the second-part sidelink channel has a same function as the reference value for the first-part sidelink channel, the reference value for the second-part sidelink channel takes a same value as the reference value for the first-part sidelink channel.

Optionally, in the embodiment of this disclosure, the information on the first-part sidelink channel includes at least one of the following:
an identifier of a receiving terminal;
an identifier of a transmitting terminal;
a transmission mode of the sidelink channel; or
information of the reference value for the second-part sidelink channel.

Optionally, in the embodiment of this disclosure, the information of the reference value for the second-part sidelink channel includes at least one of the following:
a reference value;
a reference value set; or
an index of a value in the reference value set.

The terminal provided in this embodiment of this disclosure can implement each process implemented by the terminal in the method embodiment in FIG. 1. To avoid repetition, details are not described herein again.

In summary, in the embodiments of this disclosure, a method for determining a reference value related to scrambling or descrambling of the sidelink channel is provided, so that the sidelink channel can be scrambled or descrambled while protocol overheads are reduced.

It should be noted that the terminal provided in this embodiment of this disclosure is a terminal capable of performing the foregoing method for determining a reference value, and all embodiments of the foregoing method for determining a reference value are applicable to the terminal, with the same or similar beneficial effects achieved.

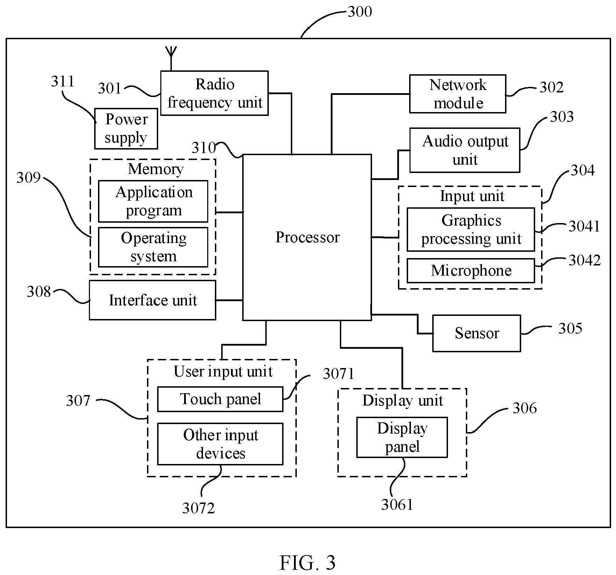

FIG. 3 is a schematic diagram of a hardware structure of a terminal for implementing the embodiments of this disclosure. The terminal 300 includes but is not limited to components such as a radio frequency unit 301, a network module 302, an audio output unit 303, an input unit 304, a sensor 305, a display unit 306, a user input unit 307, an interface unit 308, a memory 309, a processor 310, and a power supply 311. A person skilled in the art can understand that the structure of the terminal shown in FIG. 3 does not constitute a limitation on the terminal, and the terminal may include more or fewer components than those shown in the diagram, or some components may be combined, or the components may be disposed in different manners. In this embodiment of this disclosure, the terminal includes but is not limited to a mobile phone, a tablet computer, a notebook computer, a palmtop computer, a vehicle-mounted terminal, a wearable device, a pedometer, or the like.

The processor 310 is configured to determine a reference value, where the reference value is a reference value for a sidelink channel, and a function of the reference value includes at least one of the following:
being used for scrambling or descrambling of information on the sidelink channel;
being used for initialization of a sequence of the sidelink channel;
being used for selection of a sequence of the sidelink channel;
being used for initialization of a sequence of a reference signal of the sidelink channel; or
being used for cyclic offset of a reference signal of the sidelink channel.

In summary, in the embodiments of this disclosure, a method for determining a reference value related to scrambling or descrambling of the sidelink channel is provided, so that the sidelink channel can be scrambled or descrambled while protocol overheads are reduced.

It should be noted that the terminal provided in this embodiment of this disclosure is a terminal capable of performing the foregoing method for determining a reference value, and all embodiments of the foregoing method for determining a reference value are applicable to the terminal, with the same or similar beneficial effects achieved.

It should be understood that in this embodiment of this disclosure, the radio frequency unit 301 may be configured to: receive and transmit a signal in an information receiving/transmitting process or a call process; and specifically, after downlink data from a base station is received, transmit the downlink data to the processor 310 for processing, and transmit uplink data to the base station. Usually, the radio frequency unit 301 includes but is not limited to an antenna, at least one amplifier, a transceiver, a coupler, a low noise amplifier, a duplexer, and the like. In addition, the radio frequency unit 301 may also communicate with a network and another device via a wireless communications system.

The terminal provides a user with wireless broadband Internet access by using the network module 302, for example, helping the user to send and receive an e-mail, browse a web page, and access streaming media.

The audio output unit 303 may convert audio data received by the radio frequency unit 301 or the network module 302 or stored in the memory 309 into an audio signal and output the audio signal as a sound. In addition, the audio output unit 303 may further provide audio output (for example, a call signal reception tone or a message reception tone) that is related to a specific function performed by the terminal 300. The audio output unit 303 includes a speaker, a buzzer, a receiver, and the like.

The input unit 304 is configured to receive an audio or video signal. The input unit 304 may include a graphics processing unit (Graphics Processing Unit, GPU) 3041 and a microphone 3042. The graphics processing unit 3041 processes image data of a static picture or a video obtained by an image capture apparatus (for example, a camera) in a video capture mode or an image capture mode. A processed image frame may be displayed on the display unit 306. An image frame processed by the graphics processing unit 3041 may be stored in the memory 309 (or another storage medium) or transmitted by the radio frequency unit 301 or the network module 302. The microphone 3042 is capable of receiving sounds and processing such sounds into audio data. The processed audio data may be converted into a format that may be transmitted to a mobile communications base station by using the radio frequency unit 301 in a telephone call mode, for outputting.

The terminal 300 may further include at least one sensor 305, for example, an optical sensor, a motion sensor, and another sensor. Specifically, the optical sensor includes an ambient light sensor and a proximity sensor. The ambient light sensor may adjust luminance of a display panel 3061 based on brightness of ambient light, and the proximity sensor may turn off the display panel 3061 and/or backlight when the terminal 300 moves close to an ear. As a motion sensor, an accelerometer sensor may detect a magnitude of acceleration in each direction (usually three axes), and in a stationary state, may detect a magnitude and direction of gravity, and may be used to recognize a terminal posture (for example, shift between a landscape orientation and a portrait orientation, related games, and magnetometer posture calibration) and a vibration recognition-related function (for example, a pedometer and knocking), and the like. The sensor 305 may further include a fingerprint sensor, a pressure sensor, an iris sensor, a molecular sensor, a gyroscope, a barometer, a hygrometer, a thermometer, an infrared sensor, and the like. Details are not described herein again.

The display unit 306 is configured to display information input by a user or information provided to the user. The display unit 306 may include the display panel 3061, and the display panel 3061 may be configured in a form of a liquid crystal display (Liquid Crystal Display, LCD), an organic light-emitting diode (Organic Light-Emitting Diode, OLED), or the like.

The user input unit 307 may be configured to: receive a digit or character information that is input, and generate signal input related to user settings and function control that are of the terminal. Specifically, the user input unit 307 includes a touch panel 3071 and other input devices 3072. The touch panel 3071, also referred to as a touchscreen, may capture a touch operation performed by a user on or near the touch panel 3071 (for example, an operation performed by the user on or near the touch panel 3071 by using any appropriate object or accessory such as a finger or a stylus). The touch panel 3071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into touch point coordinates, transmits the touch point coordinates to the processor 310, and receives and executes a command transmitted by the processor 310. In addition, the touch panel 3071 may be implemented in a plurality of forms, for example, as a resistive, capacitive, infrared, or surface acoustic wave touch panel. In addition to the touch panel 3071, the user input unit 307 may further include other input devices 3072. Specifically, the other input devices 3072 may include but is not limited to a physical keyboard, a function key (for example, a volume control key or a power on/off key), a trackball, a mouse, and a joystick. Details are not described herein again.

Further, the touch panel 3071 may cover the display panel 3061. When detecting a touch operation on or near the touch panel 3071, the touch panel 3071 transmits the touch operation to the processor 310 for determining a type of a touch event. Then, the processor 310 provides corresponding visual output on the display panel 3061 based on the type of the touch event. In FIG. 3, the touch panel 3071 and the display panel 3061 serve as two independent components to implement input and output functions of the terminal. In some embodiments, however, the touch panel 3071 may be integrated with the display panel 3061 to implement the input and output functions of the terminal. Details are not limited herein.

The interface unit 308 is an interface between an external apparatus and the terminal 300. For example, the external apparatus may include a wired or wireless headphone port, an external power (or battery charger) port, a wired or wireless data port, a memory card port, a port for connecting an apparatus having an identification module, an audio input/output (I/O) port, a video I/O port, an earphone port, and the like. The interface unit 308 may be configured to receive an input (for example, data information or power) from the external apparatus and transmit the received input to one or more elements within the terminal 300, or may be configured to transmit data between the terminal 300 and the external apparatus.

The memory 309 may be configured to store a software program and various data. The memory 309 may mainly include a program storage area and a data storage area. The program storage area may store an operating system, an application program required for at least one function (for example, a sound play function and an image play function), and the like. The data storage area may store data created based on use of a mobile phone (for example, audio data and a phone book), and the like. In addition, the memory 309 may include a high-speed random access memory, and may further include a non-volatile memory such as a magnetic disk storage device, a flash memory device, or another volatile solid-state storage device.

The processor 310 is a control center of the terminal, and is connected to all components of the terminal by using various interfaces and lines. By running or executing software programs and/or modules that are stored in the memory 309 and calling data stored in the memory 309, the processor 310 executes various functions of the terminal and processes data, to perform overall monitoring on the terminal. The processor 310 may include one or more processing units. Optionally, the processor 310 may integrate an application processor and a modem processor. The application processor mainly processes an operating system, a user interface, an application program, and the like. The modem processor mainly processes wireless communication. It can be understood that the modem processor may alternatively be not integrated in the processor 310.

The terminal 300 may further include a power supply 311 (for example, a battery) that supplies power to the components. Optionally, the power supply 311 may be logically connected to the processor 310 by using a power management system, to implement functions such as charging management, discharging management, and power consumption management by using the power management system.

In addition, the terminal 300 includes some function modules that are not shown. Details are not described herein again.

Optionally, an embodiment of this disclosure further provides a terminal, including a processor, a memory, and a computer program stored in the memory and capable of running on the processor. When the computer program is executed by the processor, the processes of the foregoing embodiment of the method for determining a reference value are implemented, with the same technical effects achieved. To avoid repetition, details are not described herein again.

An embodiment of this disclosure further provides a computer-readable storage medium, where a computer program is stored in the computer-readable storage medium. When the computer program is executed by a processor, the processes of the foregoing embodiment of the method for determining a reference value are implemented. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It should be noted that in this specification, the term "comprising", "including", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude existence of other identical elements in the process, method, article, or apparatus that includes the element.

According to the description of the foregoing embodiments, a person skilled in the art can clearly understand that the method in the foregoing embodiments may be implemented by software on a necessary universal hardware platform or by hardware only. In most cases, the former is a more preferred implementation though. Based on such an understanding, the technical solutions of this disclosure essentially or the part thereof that contributes to related technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The embodiments of this disclosure are described above with reference to the accompanying drawings, but this disclosure is not limited to the foregoing implementations. The foregoing implementations are only illustrative rather than restrictive. Inspired by this disclosure, a person of ordinary skill in the art can still derive many variations without departing from the essence of this disclosure and the protection scope of the claims. All these variations shall fall within the protection of this disclosure.

The foregoing descriptions are only specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

## Claims

1. A method for determining a reference value, applied to a terminal, comprising:
determining a reference value, wherein the reference value is a reference value for a sidelink channel, and a function of the reference value comprises at least one of the following:
being used for scrambling or descrambling of information on the sidelink channel;
being used for initialization of a sequence of the sidelink channel;
being used for selection of a sequence of the sidelink channel;
being used for initialization of a sequence of a reference signal of the sidelink channel; or
being used for cyclic offset of a reference signal of the sidelink channel.

2. The method according to claim 1, wherein in a case that sidelink channels comprise a first-part sidelink channel and a second-part sidelink channel, the reference value comprises a reference value for the first-part sidelink channel and a reference value for the second-part sidelink channel, wherein
a function of the reference value for the first-part sidelink channel comprises at least one of the following:
being used for scrambling or descrambling of information on the first-part sidelink channel;
being used for initialization of a sequence of the first-part sidelink channel;
being used for selection of a sequence of the first-part sidelink channel;
being used for initialization of a sequence of a reference signal of the first-part sidelink channel; or
being used for cyclic offset of a reference signal of the first-part sidelink channel; and
a function of the reference value for the second-part sidelink channel comprises at least one of the following:
being used for scrambling or descrambling of information on the second-part sidelink channel;
being used for initialization of a sequence of the second-part sidelink channel;
being used for selection of a sequence of the second-part sidelink channel;
being used for initialization of a sequence of a reference signal of the second-part sidelink channel; or
being used for cyclic offset of a reference signal of the second-part sidelink channel.

3. The method according to claim 2, further comprising:
determining the reference value for the second-part sidelink channel based on indication by the information on the first-part sidelink channel, wherein
the information on the first-part sidelink channel indicates the reference value, or the information on the first-part sidelink channel indicates an index of a value in a fourth set, or the information on the first-part sidelink channel is used to implicitly indicate an index of a value in a fourth set; and
the fourth set is pre-defined by a protocol or configured by a terminal or pre-configured by a network or configured by a network, and the fourth set comprises at least one value.

4. The method according to claim 1 or 2, wherein the reference value is any one of the following:
a fixed value pre-defined by a protocol or configured by a terminal or pre-configured by a network or configured by a network;
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

5. The method according to claim 1 or 2, wherein the determining a reference value comprises:
selecting the reference value in a first set based on a target identifier, wherein the first set is pre-defined by a protocol or configured by a terminal or pre-configured by a network or configured by a network, and the first set comprises at least one value; and
the target identifier comprises any one of the following:
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

6. The method according to claim 1 or 2, wherein the determining a reference value comprises:
selecting, a value that has a mapping relationship with a target identifier, as the reference value, based on a mapping relationship that is pre-defined by a protocol or configured by a terminal or pre-configured by a network or configured by a network, where
the target identifier comprises any one of the following:
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

7. The method according to claim 1 or 2, wherein the determining a reference value comprises:
determining that a value indicated by indication information that is sent by a network side device is the reference value, wherein the indication information is used to indicate a value in a second set, or the indication information is used to indicate an index of a value in a second set; and
the second set is pre-defined by a protocol or configured by a terminal or pre-configured by a network or configured by a network, and the second set comprises at least one value.

8. The method according to claim 1 or 2, wherein the determining a reference value comprises:
randomly selecting a value in a third set as the reference value, wherein
the third set is pre-defined by a protocol or configured by a terminal or pre-configured by a network or configured by a network, and the third set comprises at least one value.

9. The method according to claim 1 or 2, wherein the determining a reference value comprises:
determining the reference value based on a transmission mode of the sidelink channel, wherein
in a case that the transmission mode of the sidelink channel is broadcast, the reference value is determined to be a fixed value, wherein the fixed value is pre-defined by a protocol or configured by a terminal or pre-configured by a network or configured by a network; and
in a case that the transmission mode of the sidelink channel is unicast or multicast, the reference value is determined to be any one of the following identifiers:
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

10. The method according to claim 2, further comprising:
determining the reference value for the second-part sidelink channel based on a transmission mode indicated by the first-part sidelink channel, wherein
in a case that the transmission mode is unicast or multicast, the reference value is an identifier of a receiving terminal or an identifier of a terminal group where a receiving terminal is located or an identifier of a transmitting terminal; and
in a case that the transmission mode is broadcast,
the reference value is a fixed value or a random value in a fifth set, wherein the fifth set is pre-defined by a protocol or configured by a terminal or pre-configured by a network or configured by a network, and the fifth set comprises at least one value.

11. The method according to claim 2, further comprising:
determining the reference value for the second-part sidelink channel based on the information on the first-part sidelink channel, wherein all or some of the information on the first-part sidelink channel is used as the reference value.

12. The method according to claim 7, further comprising:
receiving downlink control information DCI or radio resource control RRC signaling or sidelink control information SCI, wherein the DCI or RRC signaling or SCI is sent by the network side device and carries the indication information.

13. The method according to claim 1, wherein
in a case that the reference value has different functions, the reference value takes a same value or different values.

14. The method according to claim 2, wherein the reference value satisfies at least one of the following conditions:
in a case that the reference value for the first-part sidelink channel has different functions, the reference value for the first-part sidelink channel takes a same value or different values;
in a case that the reference value for the second-part sidelink channel has different functions, the reference value for the second-part sidelink channel takes a same value or different values; and
in a case that the reference value for the second-part sidelink channel has a same function as the reference value for the first-part sidelink channel, the reference value for the second-part sidelink channel takes a same value as the reference value for the first-part sidelink channel.

15. The method according to claim 2, wherein the information on the first-part sidelink channel comprises at least one of the following:
an identifier of a receiving terminal;
an identifier of a transmitting terminal;
a transmission mode of the sidelink channel; or
information about the reference value for the second-part sidelink channel.

16. The method according to claim 15, wherein the information about the reference value for the second-part sidelink channel comprises at least one of the following:
a reference value;
a reference value set; or
an index of a value in the reference value set.

17. A terminal, comprising:
a determining module, configured to determine a reference value, wherein the reference value is a reference value for a sidelink channel, and a function of the reference value comprises at least one of the following:
being used for scrambling or descrambling of information on the sidelink channel;
being used for initialization of a sequence of the sidelink channel;
being used for selection of a sequence of the sidelink channel;
being used for initialization of a sequence of a reference signal of the sidelink channel; or
being used for cyclic offset of a reference signal of the sidelink channel.

18. The terminal according to claim 17, wherein in a case that sidelink channels comprise a first-part sidelink channel and a second-part sidelink channel, the reference value comprises a reference value for the first-part sidelink channel and a reference value for the second-part sidelink channel, wherein
a function of the reference value for the first-part sidelink channel comprises at least one of the following:
being used for scrambling or descrambling of information on the first-part sidelink channel;
being used for initialization of a sequence of the first-part sidelink channel;
being used for selection of a sequence of the first-part sidelink channel;
being used for initialization of a sequence of a reference signal of the first-part sidelink channel; or
being used for cyclic offset of a reference signal of the first-part sidelink channel; and
a function of the reference value for the second-part sidelink channel comprises at least one of the following:
being used for scrambling or descrambling of information on the second-part sidelink channel;
being used for initialization of a sequence of the second-part sidelink channel;
being used for selection of a sequence of the second-part sidelink channel;
being used for initialization of a sequence of a reference signal of the second-part sidelink channel; or
being used for cyclic offset of a reference signal of the second-part sidelink channel.

19. The terminal according to claim 18, further comprising:
a second determining module, configured to determine the reference value for the second-part sidelink channel based on indication by the information on the first-part sidelink channel, wherein
the information on the first-part sidelink channel indicates the reference value, or the information on the first-part sidelink channel indicates an index of a value in a fourth set, or the information on the first-part sidelink channel is used to implicitly indicate an index of a value in a fourth set; and
the fourth set is pre-defined by a protocol or configured by a terminal or pre-configured by a network or configured by a network, and the fourth set comprises at least one value.

20. The terminal according to claim 17 or 18, wherein the reference value is any one of the following:
a fixed value pre-defined by a protocol or configured by a terminal or pre-configured by a network or configured by a network;
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

21. The terminal according to claim 17 or 18, wherein the determining module comprises:
a second determining submodule, configured to select the reference value in a first set based on a target identifier, wherein the first set is pre-defined by a protocol or configured by a terminal or pre-configured by a network or configured by a network, and the first set comprises at least one value; and
the target identifier comprises any one of the following:
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

22. The terminal according to claim 17 or 18, wherein the determining module comprises:
a third determining submodule, configured to select, a value that has a mapping relationship with a target identifier, as the reference value, based on a mapping relationship that is pre-defined by a protocol or configured by a terminal or pre-configured by a network or configured by a network; and
the target identifier comprises any one of the following:
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

23. The terminal according to claim 17 or 18, wherein the determining module comprises:
a fourth determining submodule, configured to determine that a value indicated by indication information that is sent by a network side device is the reference value, wherein the indication information is used to indicate a value in a second set, or the indication information is used to indicate an index of a value in a second set; and
the second set is pre-defined by a protocol or configured by a terminal or pre-configured by a network or configured by a network, and the second set comprises at least one value.

24. The terminal according to claim 17 or 18, wherein the determining module comprises:
a fifth determining submodule, configured to randomly select a value in a third set as the reference value, wherein
the third set is pre-defined by a protocol or configured by a terminal or pre-configured by a network or configured by a network, and the third set comprises at least one value.

25. The terminal according to claim 17 or 18, wherein the determining module comprises:
a first determining submodule, configured to determine the reference value based on a transmission mode of the sidelink channel, wherein
in a case that the transmission mode of the sidelink channel is broadcast, the reference value is determined to be a fixed value, wherein the fixed value is pre-defined by a protocol or configured by a terminal or pre-configured by a network or configured by a network; and
in a case that the transmission mode of the sidelink channel is unicast or multicast, the reference value is determined to be any one of the following identifiers:
a zone identifier of a location of a transmitting terminal;
a zone identifier of a location of a receiving terminal;
an identifier of a resource pool where a transmitting resource selected by a transmitting terminal is located;
an identifier of a transmitting resource selected by a transmitting terminal;
an identifier of a receiving terminal;
an identifier of a terminal group where a receiving terminal is located;
an identifier of a terminal group where a transmitting terminal is located; or
an identifier of a transmitting terminal.

26. The terminal according to claim 18, further comprising:
a third determining module, configured to determine the reference value for the second-part sidelink channel based on a transmission mode indicated by the first-part sidelink channel, wherein
in a case that the transmission mode is unicast or multicast, the reference value is an identifier of a receiving terminal or an identifier of a terminal group where a receiving terminal is located or an identifier of a transmitting terminal; and
in a case that the transmission mode is broadcast, the reference value is a fixed value or a random value in a fifth set, wherein the fifth set is pre-defined by a protocol or configured by a terminal or pre-configured by a network or configured by a network, and the fifth set comprises at least one value.

27. The terminal according to claim 18, further comprising:
a fourth determining module, configured to determine the reference value for the second-part sidelink channel based on the information on the first-part sidelink channel, wherein all or some of the information on the first-part sidelink channel is used as the reference value.

28. A terminal, comprising a processor, a memory, and a computer program that is stored in the memory and capable of running on the processor, wherein when the computer program is executed by the processor, the steps of the method for determining a reference value according to any one of claims 1 to 16 are implemented.

29. A computer-readable storage medium, wherein the computer-readable storage medium stores a computer program, and when the computer program is executed by a processor, the steps of the method for determining a reference value according to any one of claims 1 to 16 are implemented.
